(19) Europäisches Patentamt
European Patent Office
Office européen des brevets

(11) **EP 2 668 635 B1**

(12) **FASCICULE DE BREVET EUROPEEN**

(45) Date de publication et mention
de la délivrance du brevet:
**27.06.2018 Bulletin 2018/26**

(21) Numéro de dépôt: **12702599.7**

(22) Date de dépôt: **09.01.2012**

(51) Int Cl.:
***G06T 5/00*** *(2006.01)*

(86) Numéro de dépôt international:
**PCT/FR2012/050055**

(87) Numéro de publication internationale:
**WO 2012/101355 (02.08.2012 Gazette 2012/31)**

(54) **TRAITEMENT DE DONNÉES D'IMAGES COMPORTANT DES EFFETS DE TURBULENCES DANS UN MILIEU LIQUIDE**

VERARBEITUNG VON BILDDATEN MIT TURBULENZAUSWIRKUNGEN IN EINEM FLÜSSIGEN MEDIUM

PROCESSING OF IMAGE DATA COMPRISING EFFECTS OF TURBULENCE IN A LIQUID MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.01.2011 FR 1150655**

(43) Date de publication de la demande:
**04.12.2013 Bulletin 2013/49**

(73) Titulaire: **Electricité de France
75008 Paris (FR)**

(72) Inventeurs:
• **PAUL, Nicolas
93100 Montreuil (FR)**
• **DE CHILLAZ, Antoine
92130 Issy Les Moulineaux (FR)**

(74) Mandataire: **Cabinet Plasseraud
66, rue de la Chaussée d'Antin
75440 Paris Cedex 09 (FR)**

(56) Documents cités:
**US-A- 5 912 934    US-A1- 2009 252 430**

• LYCKSAM H ET AL: "Wiener filtering of interferometry measurements through turbulent air using an exponential forgetting factor", APPLIED OPTICS, OPTICAL SOCIETY OF AMERICA, WASHINGTON, DC; US, vol. 47, no. 16, 1 juin 2008 (2008-06-01), pages 2971-2978, XP001514550, ISSN: 0003-6935, DOI: 10.1364/AO.47.002971
• WEILIN HOU W: "A simple underwater imaging model", OPTICS LETTERS, OPTICAL SOCIETY OF AMERICA, US, vol. 34, no. 17, 1 September 2009 (2009-09-01), pages 2688-2690, XP001548164, ISSN: 0146-9592, DOI: 10.1364/OL.34.002688 [retrieved on 2009-08-31]

EP 2 668 635 B1

**Description**

La présente invention concerne le traitement de données d'images numériques.

Elle vise en particulier le traitement d'images successives (typiquement d'une séquence filmée). Ces images sont acquises par une caméra et en particulier la caméra est immergée dans un liquide présentant des turbulences. Par exemple, ces turbulences peuvent être dues à des inhomogénéités dans le milieu liquide, telles que des différences locales de température. De telles turbulences causent un effet de déplacement apparent de pixels des images. Par exemple, une différence locale de température dans une région correspondant à un bord d'image entraîne une turbulence dont l'effet sur les images filmées se manifeste par une perturbation des pixels dans ce bord d'image avec un déplacement apparent (par rapport à une position d'origine) de certains de ces pixels, ce déplacement étant variable dans le temps (de façon aléatoire).

Le caractère aléatoire de ces variations implique une difficulté (voire une impossibilité) dans le traitement des images pour en supprimer les effets de turbulences.

Le brevet US2009/0252430 divulgue la correction de bruit dans les images sous-marines par déconvolution, sans prendre en compte les turbulences.

Le document "A simple underwater imaging model", Weilin Hou, Optics letters, vol. 34, no. 17, pp. 2688-2690 divulgue la modélisation des turbulences en imagerie sous-marine.

La présente invention vient améliorer la situation.

Elle propose à cet effet un procédé de traitement de données d'images du type précité, comportant en particulier :

- une modélisation de l'effet des turbulences sur les pixels des images, et
- une déconvolution par ladite modélisation d'une image moyennée dans le temps.

Avantageusement, il a été observé en effet qu'il était possible de parfaitement modéliser l'effet des turbulences, mais sur une durée relativement longue. Ainsi, le fait de moyenner les mêmes pixels d'une image dans le temps permet « d'écraser » l'effet des turbulences. On obtient une image moyenne, floue. Pour rendre nette cette image, on lui applique une déconvolution par un modèle représentant des turbulences.

Bien entendu, il est supposé que la scène que filme la caméra est fixe, bien qu'un mode de réalisation présenté plus loin dans la présente description traite le cas d'une caméra en translation par rapport à une scène fixe.

Dans une réalisation avantageuse, la modélisation précitée des turbulences comporte l'estimation d'un modèle h($\mathbf{u}$) de densité de probabilité d'un vecteur de déplacement $\mathbf{u}$ relatif à l'effet de turbulences. Il a été observé en particulier que de façon particulièrement avantageuse, une modélisation probabiliste de l'effet des turbulences sur les pixels des images permettait de répondre parfaitement au problème de modéliser des turbulences a priori aléatoires.

Un exemple de modèle avantageux est de type à décroissance exponentielle, et peut s'exprimer en fonction du vecteur $\mathbf{u}$, par une relation du type :

$$h_\sigma(\mathbf{u}) = \frac{A}{\sigma^2} \exp\left\{ -\frac{B\|\mathbf{u}\|}{\sigma} \right\}$$

où :

- $\sigma$ représente l'écart-type de la norme du vecteur $\mathbf{u}$,

- A et B sont des constantes réelles positives, telles que par exemple A=3/$\pi$ et $B = \sqrt{6}$ .

D'autres réalisations sont possibles et seront décrites plus loin.

Pour ce qui concerne l'estimation de l'image moyenne dans le temps, on prévoit dans une réalisation possible une moyenne pondérée par des puissances d'un facteur d'oubli (noté ci-après $\alpha$), respectivement décroissantes en fonction du temps.

L'image moyenne $\mathbf{I}_\alpha(\mathbf{x},n)$, estimée à l'instant n pour un pixel de coordonnées vectorielles $\mathbf{x}$, peut être donnée alors par :

$$\mathbf{I}_\alpha(\mathbf{x},n) = \frac{1-\alpha}{1-\alpha^n} \sum_{k=0}^{n-1} \alpha^k \mathbf{I}(\mathbf{x}, n-k)$$

le terme $\alpha$ étant un réel correspondant au facteur d'oubli.

En pratique, l'image moyenne dans le temps peut être estimée par un filtrage temporel récursif.

Ainsi, une n$^{\text{ième}}$ sortie du filtre temporel, pour l'instant n, notée $\mathbf{I}_t(\mathbf{x},n)$, et l'image moyenne $\mathbf{I}_\alpha(\mathbf{x},n)$ sont liées par les relations :

$$\mathbf{I}_f\big(\mathbf{x},n\big) = \alpha\mathbf{I}_f\big(\mathbf{x},n-1\big) + \big(1-\alpha\big)I\big(\mathbf{x},n\big)$$

$$\mathbf{I}_\alpha\big(\mathbf{x},n\big) = \frac{1}{1-\alpha^n}\mathbf{I}_f\big(\mathbf{x},n\big)$$

Les essais réalisés ont montré que le facteur d'oubli a avait avantage à être proche de 1, tout en étant inférieur à 1. Une valeur choisie égale à 0,99 a donné de bons résultats.

Pour ce qui concerne maintenant la déconvolution par la modélisation, on prévoit avantageusement l'application d'un filtrage spatial, linéaire, d'expression correspondant à la modélisation précitée.

Le filtrage spatial peut avantageusement être de type de Wiener, bien que d'autres réalisations soient possibles.

Le filtre spatial est donné par exemple dans le domaine spectral par une expression du type :

$$W_\sigma\big(\mathbf{f}\big) = \frac{H_\sigma^*\big(\mathbf{f}\big)}{\big\|H_\sigma\big(\mathbf{f}\big)\big\|^2 + \dfrac{S_b\big(\mathbf{f}\big)}{S_{\text{nette}}\big(\mathbf{f}\big)}}, \quad \text{si } \big\|\mathbf{f}\big\| \leq f_c$$

$$W_\sigma\big(\mathbf{f}\big) = 0, \quad \text{si } \big\|\mathbf{f}\big\| > f_c$$

où :

- $\mathbf{f}$ est un vecteur bidimensionnel de deux fréquences normalisées après transformée de Fourier bidimensionnelle,
- $f_c$ est une fréquence de coupure du filtre pour éliminer d'éventuels repliements spectraux,
- $S_b(\mathbf{f})$ et $S_{\text{nette}}(\mathbf{f})$ sont respectivement des densités spectrales de puissance d'un bruit et d'une image nette à déterminer, et
- $H_\sigma(\mathbf{f})$ est la transformée de Fourier bidimensionnelle de la densité de probabilité de l'effet des turbulences h($\mathbf{u}$).

Une simplification de cette expression revient à considérer le filtre spatial selon une relation du type :

$$W_\sigma\big(\mathbf{f}\big) = \frac{H_\sigma\big(\mathbf{f}\big)}{H_\sigma^2\big(\mathbf{f}\big) + \text{RBS}}$$

où le terme RBS s'exprime en fonction de paramètres choisis de sorte que le terme RBS soit compris entre $10^{-2}$ et $10^{-4}$.

Avec une relation du type précité :

$$h_\sigma\big(\mathbf{u}\big) = \frac{A}{\sigma^2}\exp\left\{-\frac{B\big\|\mathbf{u}\big\|}{\sigma}\right\},$$

la transformée de Fourier bidimensionnelle $H_\sigma(\mathbf{f})$ de la densité de probabilité de l'effet des turbulences $h_\sigma(\mathbf{u})$, est donnée par :

$$H_\sigma\big(\mathbf{f}\big) = \Big(1 + C\big(\sigma.\big\|\mathbf{f}\big\|\big)^2\Big)^{-\frac{3}{2}}$$

où C est une constante réelle positive et σ est un réel positif compté en nombre de pixels.

On peut reprendre les valeurs des constantes A et B données précédemment et définir complètement la transformée de Fourier bidimensionnelle $H_\sigma(\mathbf{f})$, laquelle est alors donnée par :

$$H_\sigma(\mathbf{f}) = \left(1 + \frac{2}{3}\left(\pi\sigma.\|\mathbf{f}\|\right)^2\right)^{-\frac{3}{2}}$$

En particulier, les essais réalisés ont montré que le terme σ était avantageusement à prévoir entre 0 et 30 pixels.

Comme annoncé précédemment, la présente invention prévoit un mode de réalisation où la caméra peut se déplacer en translation relativement à une scène fixe. Dans ce cas, on peut conserver le traitement présenté ci-avant en prenant néanmoins la précaution d'appliquer un recalage de pixels d'une image à un instant n-1 à une image suivante à l'instant n, en tenant compte alors d'une vitesse de déplacement de la caméra.

Ainsi, dans ce mode de réalisation, on applique un recalage d'une image précédente à une image courante, pour l'estimation de l'image moyenne.

Le filtrage temporel récursif s'effectue alors avec recalage et normalisation et dans un exemple de réalisation, le traitement global comporte les étapes :

-  d'initialisation, avec :

$$\mathbf{I}_f(\mathbf{x},1) = 0 \quad \mathbf{N}(\mathbf{x},1) = 0,$$

-  de filtrage temporel récursif, avec :

$$\mathbf{I}_f(\mathbf{x},n) = (1-\alpha)\mathbf{I}(\mathbf{x},n) + \alpha\mathbf{I}_f\left(\mathbf{x} + [\delta_{n,n-1}], n-1\right),$$

où

$$[\boldsymbol{\delta}_{n,n-1}] = \left([\delta x_{n,n-1}], [\delta y_{n,n-1}]\right)$$

correspond à un vecteur de décalages en lignes x et/ou en colonnes y, arrondis aux entiers les plus proches, entre l'image courante n et l'image précédente n-1 du fait de la translation de la caméra,

-  de mise à jour d'une matrice de normalisation **N,** avec :

$$\mathbf{N}(\mathbf{x},n) = (1-\alpha) \times 1 + \alpha\mathbf{N}\left(\mathbf{x} + [\delta_{n,n-1}], n-1\right)$$

-  et de normalisation de la sortie du filtre temporel, avec :

$$\mathbf{I}_m(\mathbf{x},n) = \frac{1}{\mathbf{N}(\mathbf{x},n)}\mathbf{I}_f(\mathbf{x},n)$$

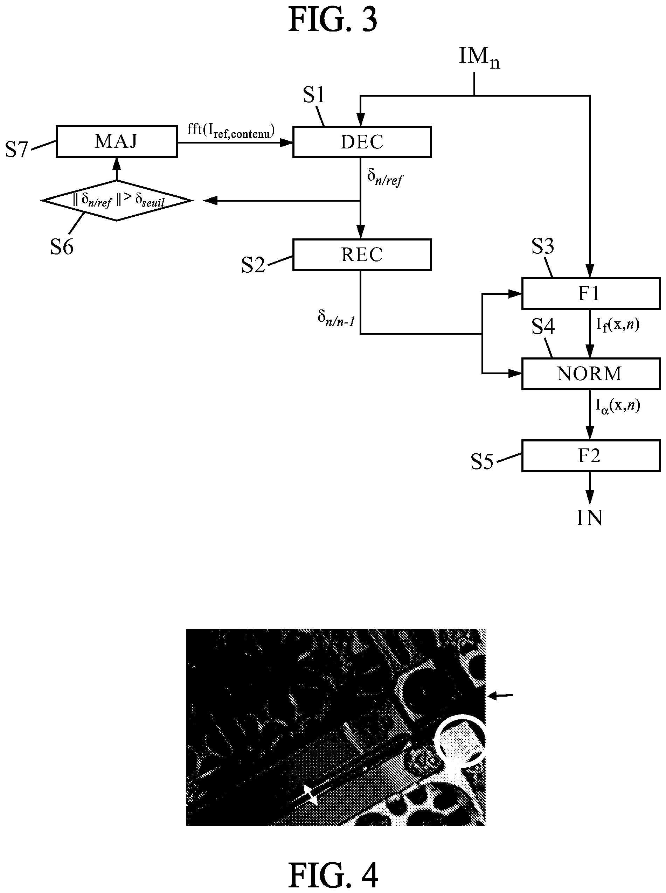

La présente invention vise aussi un programme informatique comportant des instructions pour la mise en oeuvre du procédé ci-avant lorsque ce programme est exécuté par un processeur. Un exemple d'organigramme de l'algorithme général d'un tel programme est donné sur la figure 3 laquelle sera décrite en détails plus loin.

La présente invention vise aussi un dispositif de traitement de données d'images, comportant une entrée pour traiter des données d'images numériques successives, acquises par une caméra immergée dans un liquide comportant des turbulences causant un effet de déplacement apparent de pixels des images. En particulier, un tel dispositif comporte en outre des moyens de calcul pour la mise en oeuvre du procédé ci-avant. De tels moyens de calculs peuvent inclure un processeur et une mémoire de travail pour exécuter par exemple les instructions du programme informatique précité.

La présente invention trouve une application avantageuse, mais non limitative, au traitement de données d'images acquises par une caméra immergée dans l'eau d'une installation nucléaire, pour filmer des assemblages de combustible. Une telle utilisation du procédé au sens de l'invention, dans ce contexte, peut alors comporter au moins :

- la détermination, à partir des images acquises et traitées, d'un état des assemblages de combustible.

Par exemple, on peut déterminer, dans les images acquises et traitées, au moins un identifiant d'assemblage de combustible.
Cette réalisation permet avantageusement de contrôler et vérifier l'agencement des assemblages dans le coeur.
L'utilisation du procédé au sens de l'invention peut comporter en outre :

- la mesure, dans lesdites images, d'un écart entre assemblages de combustibles.

Cette réalisation permet avantageusement de contrôler et vérifier finement les positions respectives des assemblages dans le coeur.
Finalement, on comprendra que la mise en oeuvre du procédé au sens de l'invention dans le cadre d'une telle utilisation permet globalement l'inspection de l'état des assemblages, que ce soit dans l'eau des cuves du bâtiment réacteur ou dans la piscine d'entreposage du bâtiment combustible.
La présente invention vise aussi une installation pour la mise en oeuvre d'une telle utilisation et comportant au moins une caméra, préférentiellement étanche et robuste aux radiations, reliée à un dispositif du type précité pour la mise en oeuvre de l'invention.
D'autres avantages et caractéristiques de l'invention apparaîtront à la lecture de la description détaillée ci-après d'exemples de réalisation non limitatifs, ainsi qu'à l'examen des dessins annexés sur lesquels :

- la figure 1 représente schématiquement un coeur de réacteur dans le cadre d'une mise en oeuvre de l'invention, ainsi qu'une installation comportant une caméra et un dispositif pour la mise en oeuvre de l'invention,
- la figure 2 illustre schématiquement des étapes du procédé dans une réalisation de l'invention, à l'appui d'images non traitée et traitées par la mise en oeuvre de l'invention,
- la figure 3 est un organigramme schématique des étapes du procédé dans une réalisation où la caméra est en mouvement de translation,
- la figure 4 illustre une image nette obtenue après application du procédé dont les étapes sont illustrées sur la figure 3.

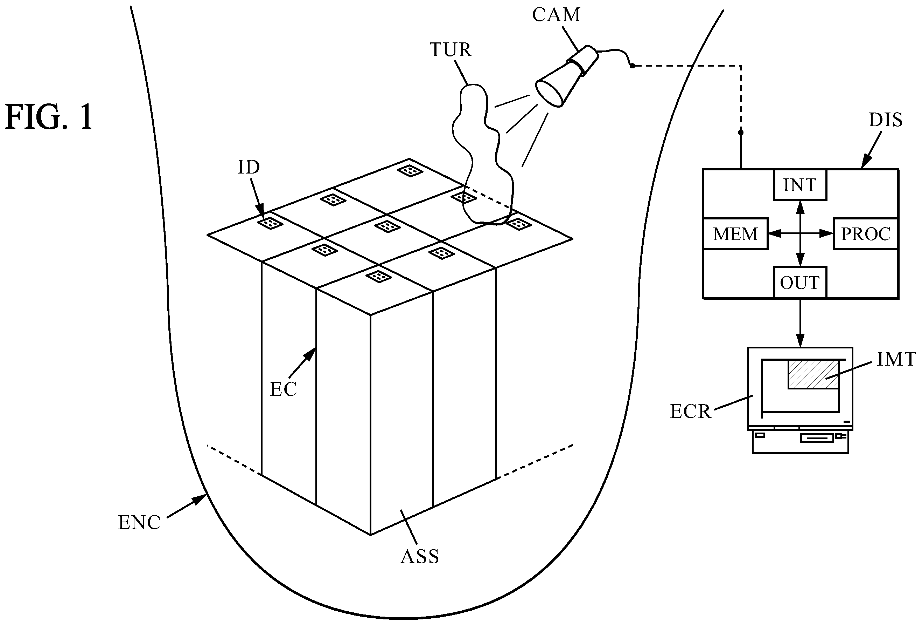

On se réfère tout d'abord à la figure 1 sur laquelle un coeur de réacteur dans une enceinte ENC remplie d'eau comporte une pluralité d'assemblages ASS de combustible nucléaire (comportant chacun habituellement une multiplicité de crayons de combustible par exemple). Chaque assemblage ASS comporte un identifiant ID (entouré d'un cercle blanc sur la vue de la figure 4) et les assemblages sont espacés d'un écart inter-assemblages EC.
On prévoit alors une caméra CAM filmant les assemblages ASS et, en particulier, une zone appelée « trous S » entre de tels assemblages (non représentée sur la figure 1) et/ou au moins un identifiant ID d'assemblage. Les images obtenues par la caméra permettent alors :

- pour les trous S par exemple, de repérer en temps utile la déformation du trou, afin de diminuer le risque d'accrochage d'assemblages combustibles à des pions intervenant pour stabiliser les assemblages, et
- pour la lecture de l'identifiant d'assemblage, de s'assurer que chaque assemblage combustible est à l'emplacement spécifié dans un plan de coeur prédéterminé.

Ces images sont prises avec la caméra CAM en immersion dans l'eau baignant les assemblages. Du fait des différences de température dans l'eau in situ (entraînant des variations locales de l'indice de l'eau), il se crée des turbulences optiques TUR. La présente invention propose de modéliser une turbulence affectant une image et d'utiliser ce modèle de turbulence pour traiter les images acquises. Un mode de réalisation avantageux permet de traiter aussi des translations de la caméra qui acquiert ces images, avec en particulier une technique de recalage d'image qui s'adapte à la vitesse de translation.
En référence encore à la figure 1, la caméra CAM est reliée à un dispositif DIS pour le traitement des images acquises et comportant typiquement :

- une interface INT de réception des données d'images acquises,
- un processeur PROC et une mémoire de travail MEM pour traiter ces données d'images,
- une interface de sortie OUT pour mettre en forme et communiquer un signal d'image vers un écran ECR affichant alors les images traitées IMT (un exemple d'image traitée étant représenté sur la figure 4).

Ainsi, l'utilisation du procédé au sens de l'invention est avantageuse dans le contexte d'inspections télévisuelles, notamment de fin de rechargement de combustible constituent actuellement une étape importante des arrêts de tranche des centrales nucléaires pour la production d'électricité. Ces inspections télévisuelles sont réalisées afin de vérifier le plan de coeur (via l'identification des numéros d'assemblage) et de localiser avec exactitude les assemblages (via, par exemple, les mesures de jeux entre assemblages). Les inspections télévisuelles permettent en outre de vérifier par exemple le positionnement d'assemblages.

Le procédé trouve aussi une application avantageuse dans le traitement d'une succession d'images (photographies) pour aider notamment au calcul des localisations de tout ou partie des éléments d'assemblage, mais aussi dans l'inspection de l'état des assemblages, par exemple dans le bâtiment combustible.

L'interprétation de ces inspections télévisuelles pose souvent des difficultés en raison du dégagement de chaleur des combustibles qui entraîne des turbulences dans l'eau. Face à ces difficultés, il a été développé une technique de traitement des séquences filmées. Les algorithmes de ces traitements ont été conçus pour fonctionner en temps réel (donc pour être capable de traiter un flux vidéo au fil de l'eau).

Globalement, le traitement repose sur une modélisation probabiliste de l'effet des turbulences sur les pixels des images. Ce modèle de turbulence permet de définir un algorithme de traitement de restauration en deux étapes :

- un premier filtrage, temporel, permet d'obtenir une image stable, mais floue (on montre que cette image floue se présente comme la convolution de l'image nette originale (inconnue) par un filtre spatial linéaire, dont l'expression est exactement égale à la densité de probabilité du vecteur de turbulences) ;
- un deuxième filtrage, spatial quant à lui, par exemple de Wiener, permet de rendre nette l'image originale (qui s'obtient ainsi par déconvolution linéaire).

Le traitement en deux étapes décrit ci-dessus s'applique lorsque la caméra est fixe. En raison du temps de convergence du filtre temporel, il est préférable d'immobiliser la caméra pendant quelques secondes avant d'obtenir une image restaurée satisfaisante. Il est proposé alors dans un mode de réalisation avantageux, une technique de traitement d'image lorsque la caméra est en mouvement (typiquement un mouvement de translation, correspondant au cas le plus fréquent).

Dans le cas d'une caméra en translation, une étape (optionnelle mais avantageuse) de recalage d'image est proposée pour permettre au filtre temporel de s'adapter aux variations de la caméra. Ce recalage d'image s'effectue via une estimation préliminaire du mouvement de la caméra. Les performances sont satisfaisantes, avantageusement sans perte de qualité par rapport aux traitements sur caméra fixe.

On décrit ci-après, dans un premier temps, un exemple de modèle de dégradation dû aux turbulences.

Ci-après, $I(\mathbf{x},n,c)$ désigne la valeur du pixel de coordonnées $\mathbf{x} = (x, y)$ sur la n$^{\text{ième}}$ image brute reçue, pour la composante c (c =1,2,3 respectivement pour les composantes rouge, verte, bleue). Les traitements étant identiques sur les trois composantes, les notations sont simplifiées en ne mentionnant pas la composante traitée, et $I(\mathbf{x},n,c)$ s'écrit simplement $I(\mathbf{x},n)$.

Dans des conditions idéales (absence de turbulences, caméra fixe, scène constante) les images $I(\mathbf{x},n)$ de la séquence filmée résultent de l'échantillonnage d'une seule et même image nette, originale et continue, notée $I_{\text{nette}}(\mathbf{x})$, avec $I(\mathbf{x},n) = I_{\text{nette}}(\mathbf{x})$.

On considère alors qu'en présence des turbulences, chaque pixel de l'image est déplacé de sa position initiale. En notant $\mathbf{u}_{\mathbf{x},n}$ le vecteur correspondant au décalage du pixel $\mathbf{x}$, à l'image n, on peut écrire :

$$I(\mathbf{x}, n) = I_{\text{nette}}(\mathbf{x} + \mathbf{u}_{\mathbf{x},n})$$

Les déplacements dus aux turbulences sont en outre aléatoires. Il ne semble pas envisageable de trouver une expression analytique pour le vecteur déplacement $\mathbf{u}_{\mathbf{x},n}$.

Il est proposé alors une description probabiliste de ces déplacements. Le vecteur de turbulence $\mathbf{u}_{\mathbf{x},n}$ est considéré comme un vecteur aléatoire suivant une certaine densité de probabilité notée :

$$h_{\mathbf{x},n}(\mathbf{u})$$

En faisant l'hypothèse que les turbulences sont stationnaires temporellement et spatialement (dans le cas d'un milieu liquide tel que l'eau), on peut considérer que la densité de probabilité ne dépend ni de $\mathbf{x}$, ni de n, et on peut écrire :

$$h_{\mathbf{x},n}(\mathbf{u}) = h(\mathbf{u})$$

où $h(\mathbf{u})$ est la densité de probabilité des turbulences pour une image n quelconque et pour un pixel $\mathbf{x}$ quelconque.

Les traitements ci-après reposent sur cette hypothèse de stationnarité des turbulences. En effet, en notant

$I_m(\mathbf{x},n)$ l'image moyenne à l'instant n définie par :

$$\mathbf{I}_m(\mathbf{x},n) = \frac{1}{n}\sum_{k=1}^{n}\mathbf{I}(\mathbf{x},k),$$

on montre que cette image moyenne converge vers une image stable $I_{stable}(\mathbf{x})$ égale à la convolution de l'image nette originale (inconnue) par la densité de probabilité des turbulences :

$$\mathbf{I}_{stable}(\mathbf{x}) = \lim_{n \to \infty}\mathbf{I}_m(\mathbf{x},n) = [\mathbf{I}_{nette} \otimes h](\mathbf{x})$$

Ainsi, pour retrouver une image nette inconnue, il suffit de déconvoluer l'image moyenne par la densité de probabilité des turbulences h($\mathbf{u}$). Cette densité de probabilité n'étant pas connue, un modèle empirique est proposé ci-après pour décrire les variations de la densité de probabilité à partir de deux considérations physiques suivantes :

-    les turbulences sont en général isotropes et la densité de probabilité doit être indépendante de l'angle du vecteur $\mathbf{u}$
-    les petits déplacements de pixels sont plus fréquents que les grands déplacements de pixels : ainsi, quand la norme du vecteur $\mathbf{u}$ croît, la valeur h($\mathbf{u}$) doit décroître.

D'autres facteurs peuvent bien entendu intervenir dans le choix du modèle. Par exemple, il peut être pratique pour de disposer d'une expression analytique paramétrable de h($\mathbf{u}$) et, surtout, de sa transformée de Fourier. Un modèle simple qui vérifie l'ensemble de ces hypothèses est de type à décroissance exponentielle, tel que par exemple :

$$h_\sigma(\mathbf{u}) = \frac{3}{\pi\sigma^2}\exp\left\{-\frac{\sqrt{6}\|\mathbf{u}\|}{\sigma}\right\}$$

Dans cette formule $\sigma$ représente l'écart-type (variation moyenne) de la norme du vecteur de turbulences. Ce paramètre permet de prendre en compte la différence du niveau de turbulences selon les séquences filmées. En variante, un modèle gaussien peut être utilisé. Toutefois, les essais avec un modèle exponentiel ont donné de bons résultats. D'autres types de modèles, présentant des décroissances plus lentes que les modèles gaussiens ou exponentiels, peuvent bien entendu être envisagés encore en variantes.

Il est ensuite possible d'estimer l'image originale en deux étapes de traitements. Dans un premier temps, la séquence des images brutes est moyennée temporellement. Cette image moyenne converge vers une image stable $I_{stable}(\mathbf{x})$ égale à la convolution de l'image nette inconnue (qui serait observée en absence de turbulences) par la densité de probabilité des turbulences, avec :

$$\mathbf{I}_{stable}(\mathbf{x}) = \lim_{n \to \infty}\mathbf{I}_m(\mathbf{x},n) = [\mathbf{I}_{nette} \otimes h](\mathbf{x})$$

La déconvolution de l'image moyenne par la densité de probabilité des turbulences permet alors, dans un second temps, d'estimer l'image nette originale.

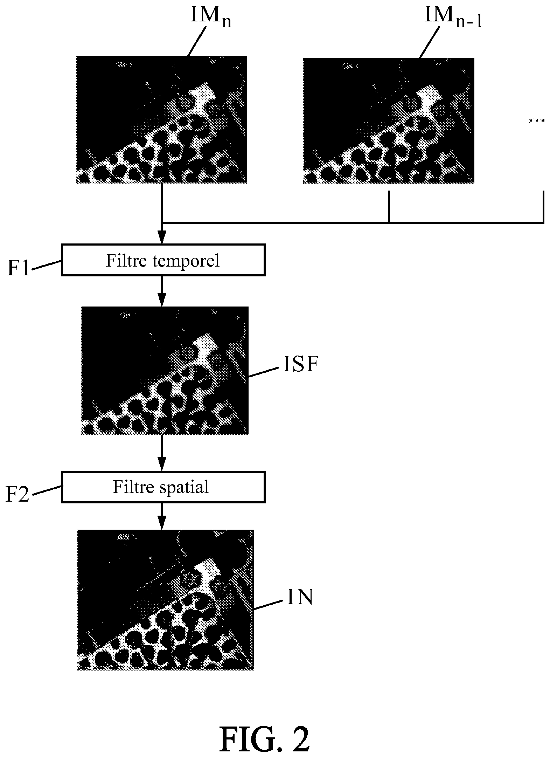

La figure 2 illustre deux étapes principales du traitement sur des images réelles d'assemblage. Un premier filtre F1, temporel, permet d'obtenir une image moyenne ISF, stable mais floue, à partir d'une succession d'images $IM_n$, $IM_{n-1}$, etc.

Un deuxième filtre F2, de déconvolution spatiale, permet de remonter à l'image nette originale IN, à partir de l'image floue ISF.

On décrit ci-après le filtrage temporel F1.

Si la scène filmée est constante (aux turbulences près), notamment en termes d'éclairage, de facteur de zoom, etc., la $n^{ième}$ image moyennée s'obtient par la formule suivante :

$$I_m(\mathbf{x}, n) = \frac{1}{n} \sum_{k=1}^{n} I(\mathbf{x}, k)$$

Dans cette formule, le même poids est accordé à chaque image. Pour gérer d'éventuelles variations de la scène (éclairage et autres), il est préférable d'accorder, dans l'image moyennée, plus de poids aux images récentes qu'aux images passées. On prend pour image moyenne à l'instant n l'image $I_\alpha(\mathbf{x},n)$ donnée par :

$$I_\alpha(\mathbf{x}, n) = \frac{1-\alpha}{1-\alpha^n} \sum_{k=0}^{n-1} \alpha^k I(\mathbf{x}, n-k)$$

Le terme a est un facteur d'oubli qui permet d'accorder plus ou moins d'importance aux images passées (comme une mémoire temporelle du filtre). La normalisation par le terme

$$\frac{1-\alpha}{1-\alpha^n}$$

permet d'avoir une somme géométrique des poids $\alpha^k$ égale à 1, car :

$$\frac{1-\alpha}{1-\alpha^n} \sum_{k=0}^{n-1} \alpha^k = 1$$

La formule $I_\alpha(\mathbf{x},n)$ peut se mettre sous la forme d'un filtrage récursif temporel suivi d'une étape de normalisation. La n$^{\text{ième}}$ sortie du filtre temporel notée $I_t(\mathbf{x},n)$ et l'image de sortie normalisée notée $I_\alpha(\mathbf{x},n)$ sont alors liées par :

$$I_f(\mathbf{x}, n) = \alpha I_f(\mathbf{x}, n-1) + (1-\alpha) I(\mathbf{x}, n)$$

$$I_\alpha(\mathbf{x}, n) = \frac{1}{1-\alpha^n} I_f(\mathbf{x}, n)$$

La valeur choisie pour le facteur d'oubli a conditionne les performances du filtre temporel. Pour évaluer ces performances, on définit l'écart quadratique moyen entre le pixel **x** de la n$^{\text{ième}}$ image et le pixel **x** de l'image stable, cible, comme suit :

$$\Gamma_\alpha^2(\mathbf{x}, n) = E\left\{ \left( I_\alpha(\mathbf{x}, n) - I_{\text{stable}}(\mathbf{x}) \right)^2 \right\}$$

Il est alors possible de définir un écart quadratique moyen pour l'ensemble de l'image n :

$$\Gamma_\alpha^2(n) = \frac{1}{N_{\text{pixels}}} \sum_{\mathbf{x}} \Gamma_\alpha^2(\mathbf{x}, n)$$

Dans le cas d'une scène constante, aux turbulences près, on montre que :

$$\Gamma_\alpha^2(n) = \frac{(1-\alpha^{2n})(1-\alpha)}{(1-\alpha^n)^2(1+\alpha)}\Sigma^2$$

où $\Sigma^2$ est la variance moyenne des pixels dans une image brute. Après convergence (quand n tend vers l'infini), la sortie normalisée du filtre temporel a pour écart quadratique résiduel :

$$\Gamma_\alpha^2(\infty) = \left(\frac{1-\alpha}{1+\alpha}\right)\Sigma^2$$

Les calculs de l'évolution de l'écart-type en fonction du nombre d'images traitées, pour différentes valeurs du facteur d'oubli $\alpha$, montrent que dans le cas d'une scène fixe, il est préférable de choisir a le plus grand possible. Dans le cas d'une scène variable toutefois, le choix d'un facteur d'oubli a résulte d'un compromis entre un faible temps d'adaptation à un changement de scène ($\alpha$ petit) et un faible écart-type résiduel ($\alpha$ grand). Si par exemple un brusque changement de scène (variation d'éclairage par exemple) intervient à un instant $n_0$, alors que le filtre temporel a convergé, on montre que l'écart-type entre la sortie du filtre à l'instant n et l'image stable devient :

$$\Gamma_\alpha^2(n) = \left(\frac{1-\alpha}{1+\alpha}\right)\Sigma^2 + \alpha^{2(n-n_0)}\Delta^2$$

où $\Delta$ représente la variation moyenne de niveau causé par le changement de scène.

Ainsi, plus le facteur d'oubli $\alpha$ est élevé, plus le temps de convergence augmente (environ 300 images, soit 12 secondes, pour $\alpha$=0,99), mais l'écart-type résiduel est suffisamment faible (0,07 pour $\alpha$=0,99) pour que l'image de sortie puisse être stabilisée. En diminuant la valeur choisie de $\alpha$, on augmente la vitesse de convergence (environ 50 images, soit 2 secondes, pour a=0,95) mais on augmente également l'écart-type résiduel (0,16 pour $\alpha$=0,95). L'image de sortie n'est pas entièrement stabilisée, même après convergence.

Dans une réalisation actuelle, le facteur d'oubli est préférentiellement fixé à 0,99. Il s'agit d'une valeur optimale dans le cas d'une scène constante (aux turbulences près). Néanmoins, le traitement présenté ici est suffisamment souple pour s'adapter à des variations fréquentes de la scène filmée (typiquement un changement d'éclairage).

En particulier, dans le cas d'une caméra en mouvement (présenté plus loin) chaque élément de la scène n'est visible que sur un nombre réduit d'image. Il peut être préférable de diminuer le facteur d'oubli pour accorder plus d'importance au temps de convergence qu'à la variance résiduelle. On décrit maintenant le filtrage spatial intervenant dans une deuxième étape du procédé, dans un exemple de réalisation.

D'après le modèle de dégradation décrit ci-avant, la sortie normalisée $I_\alpha(\mathbf{x},n)$ devient égale à l'image stable $I_{\mathbf{s}\text{table}}(\mathbf{x})$ (convolution de l'image nette inconnue par la densité de probabilité des turbulences), à laquelle s'ajoute un bruit b(x,n) de variance moyenne donnée par :

$$\Gamma_\alpha^2(n) = \frac{(1-\alpha^{2n})(1-\alpha)}{(1-\alpha^n)^2(1+\alpha)}\Sigma^2$$

ce qui s'écrit :

$$\mathbf{I}_\alpha(\mathbf{x},n) = \left[\mathbf{I}_{\text{nette}} \otimes \mathbf{h}_\sigma\right](\mathbf{x}) + b(\mathbf{x},n)$$

L'estimation de l'image nette à partir de la sortie $I_\alpha(\mathbf{x},n)$ s'apparente donc à un problème de déconvolution spatiale linéaire. Le filtre de restauration optimale est donnée par la formule de Wiener, soit, dans le domaine spectrale :

$$W_\sigma(\mathbf{f}) = \frac{H_\sigma^*(\mathbf{f})}{\|H_\sigma(\mathbf{f})\|^2 + \dfrac{S_b(\mathbf{f})}{S_{\text{nette}}(\mathbf{f})}}, \quad \text{si } \|\mathbf{f}\| \le f_c$$

$$W_\sigma(\mathbf{f}) = 0, \quad \text{si } \|\mathbf{f}\| > f_c$$

où :

- **f** est le vecteur bidimensionnel (**f**=(f,g)) des deux fréquences normalisées après transformée de Fourier 2D,
- $f_c$ est la fréquence de coupure du filtre permettant d'éliminer d'éventuels repliements spectraux sur les images d'entrée,
- $S_b$(**f**) et $S_{\text{nette}}$(**f**) sont respectivement les densités spectrales de puissance du bruit et de l'image nette à retrouver, et
- $H_\sigma$(**f**) est la transformée de Fourier 2D de h(**u**).

Avec le modèle exponentiel choisi pour h(**u**), on a :

$$H_\sigma(\mathbf{f}) = TF_{2D}\{h_\sigma(\mathbf{u})\} = \left(1 + \frac{2}{3}(\pi\sigma\|\mathbf{f}\|)^2\right)^{-\frac{3}{2}}$$

Dans un premier temps, on fait l'hypothèse que le bruit et l'image ont une densité spectrale de puissance constante (image et bruit blancs, $S_b$(**f**) et $S_{\text{nette}}$(**f**) étant constants). Sachant que la transformée de Fourier d'une densité de probabilité est réelle, le filtre optimal de restauration des images est alors donné par:

$$W_\sigma(\mathbf{f}) = \frac{H_\sigma(\mathbf{f})}{H_\sigma^2(\mathbf{f}) + RBS}$$

Ici, le terme RBS désignant le « Rapport Bruit sur Signal » correspond au rapport entre la puissance du bruit à la sortie du filtre temporel et la puissance de l'image nette (inconnue). Ce filtre de restauration comporte deux paramètres : RBS et $\sigma$. Ces deux paramètres ont une influence sur la réponse en fréquence du filtre. Pour obtenir un ordre de grandeur de RBS, on peut considérer que l'image nette (inconnue) a des valeurs de pixels réparties relativement uniformément sur une plage P. On montre que la variance des valeurs prises par les pixels est alors de $P^2/12$. Après convergence du filtre temporel, la variance résiduelle en sortie est égale à $(1-\alpha)/(1+\alpha).\Sigma^2$, où $\Sigma^2$ est la variance du bruit sur les images brutes et a est le facteur d'oubli du filtre. On a ainsi pour le rapport RBS :

$$RBS = \frac{\left(\dfrac{1-\alpha}{1+\alpha}\right)\Sigma^2}{\left(\dfrac{P^2}{12}\right)} = 12\left(\frac{1-\alpha}{1+\alpha}\right)\left(\frac{\Sigma}{P}\right)^2$$

Par exemple, pour un rapport « bruit/plage de l'image », avant traitement, de $\Sigma/P$=0,1 et avec un facteur d'oubli $\alpha$=0,99, on obtient un RBS de $6.10^{-4}$. Ce résultat donne un ordre de grandeur de la valeur optimale de RBS.

Le rapport RBS peut être fixé empiriquement suite à différents tests sur les images traitées. Typiquement, il s'avère que lorsque RBS tend vers 0, le filtre de déconvolution tend vers un filtre inverse en $1/H_\sigma$(**f**), passe-haut et trop sensible au bruit. Une valeur trop faible de RBS donne donc des images restaurées bruitées (un bruit « granulaire » ayant été observé sur les images traitées). Si RBS tend vers l'infini, le filtre de déconvolution tend vers le filtre de flou $H_\sigma$(**f**). Une trop forte valeur de RBS entraîne donc une image restaurée floue. Une valeur optimale pour RBS se situe d'après les essais entre $10^{-4}$ et $10^{-2}$, de sorte qu'une valeur par défaut de $10^{-3}$ a été choisie.

Le paramètre $\sigma$ permet d'adapter le filtre de restauration à l'écart-type (variation moyenne) des turbulences. Typiquement, si $\sigma$ est inférieur à l'écart-type réel des turbulences, le flou de l'image filtrée temporellement (en entrée du filtre spatial) n'est pas complètement atténué. Si $\sigma$ est supérieur à l'écart-type réel des turbulences, les fréquences hautes de l'image sont trop fortement amplifiées et l'image est dégradée. La valeur optimale de $\sigma$ dépend fortement du niveau des turbulences et du facteur de zoom (les turbulences dégradant plus les séquences vidéo lorsque le facteur de zoom est important). Un exemple de valeur optimale pour $\sigma$ se situe autour de 8 pixels pour de faibles turbulences. Par contre, pour des turbulences fortes avec un facteur de zoom important, la valeur optimale pour $\sigma$ se situe autour de 30 pixels. On comprendra alors que $\sigma$ peut être choisi entre 0 et 30 pixels. Ce paramètre peut être mis à jour au fil des images obtenues, au cours des traitements et selon la qualité des images obtenues.

On décrit ci-après un mode de réalisation dans lequel on tient compte d'une translation de la caméra filmant les images.

Le traitement proposé ci-avant consistait à déconvoluer la sortie normalisée d'un filtre temporel donnée par :

$$\mathbf{I}_\alpha\left(\mathbf{x},n\right)=\frac{1-\alpha}{1-\alpha^n}\sum_{k=1}^{n}\alpha^{n-k}\mathbf{I}\left(\mathbf{x},k\right)$$

Toutefois, cette moyenne ci-dessus n'a plus de sens si la caméra est en mouvement et si les images brutes sont décalées les unes par rapport aux autres. Dans le cas d'une caméra en translation, chaque image k est décalée d'un certain vecteur $\delta_{n,k}$ par rapport à l'image courante n. Si on recale chaque image en fonction de son déplacement, la formule ci-dessus devient :

$$\mathbf{I}_\alpha\left(\mathbf{x},n\right)=\frac{1-\alpha}{1-\alpha^{n(x)}}\sum_{k=n-n(x)+1}^{n}\alpha^{n-k}\widetilde{\mathbf{I}}\left(\mathbf{x}+\boldsymbol{\delta}_{nk},k\right)$$

$\delta_{nk}=(\delta x_{nk}, \delta y_{nk})$ est le vecteur des décalages en colonne (suivant x) et en ligne (suivant y) entre l'image k et l'image n et $n(\mathbf{x})$ désigne le nombre d'images successives contenant le pixel $\mathbf{x}$ après recalage.

L'expression :

$$\widetilde{\mathbf{I}}\left(\mathbf{x}+\boldsymbol{\delta}_{nk},k\right)$$

est l'interpolation de l'image brute en $\mathbf{x}+\delta_{nk}$

Comme dans le cas d'une restauration sur caméra fixe, l'image moyenne peut se mettre sous la forme d'un filtre récursif suivi d'une normalisation. La normalisation est ici plus complexe que dans le cas d'une caméra fixe, puisque le nombre d'images disponibles dépend de la zone de l'image considérée (normalisation par pixel). On montre néanmoins qu'elle s'exprime comme suit :

$$\mathbf{I}_f\left(\mathbf{x},n\right)=\left(1-\alpha\right)\mathbf{I}\left(\mathbf{x},n\right)+\alpha\widetilde{\mathbf{I}}_f\left(\mathbf{x}+\left[\boldsymbol{\delta}_{n,n-1}\right],n-1\right),$$

$$\mathbf{I}_\alpha\left(\mathbf{x},n\right)=\frac{1}{1-\alpha^{n(x)}}\mathbf{I}_f\left(\mathbf{x},n\right).$$

Ces expressions font donc intervenir l'interpolation de la sortie précédente du filtre (instant n-1).

Pour éviter des opérations d'interpolation coûteuses en calculs, on choisit de simplifier l'équation de filtrage comme suit :

$$\mathbf{I}_f\left(\mathbf{x},n\right)=\left(1-\alpha\right)\mathbf{I}\left(\mathbf{x},n\right)+\alpha\mathbf{I}_f\left(\mathbf{x}+\left[\boldsymbol{\delta}_{n,n-1}\right],n-1\right),$$

$$\mathbf{I}_\alpha(\mathbf{x}, n) = \frac{1}{1 - \alpha^{n(x)}} \mathbf{I}_f(\mathbf{x}, n)$$

Dans cette expression, on note :

$$[\boldsymbol{\delta}_{n,n-1}] = \left([\delta x_{n,n-1}], [\delta y_{n,n-1}]\right)$$

le vecteur des décalages en lignes et en colonnes, arrondis aux entiers les plus proches, entre l'image courante n et l'image précédente n-1.

On montre qu'on calcule simplement une matrice de normalisation par pixel :

$$\mathbf{N}(\mathbf{x}, n) = 1 - \alpha^{n(\mathbf{x})}$$

en calculant la sortie du filtre temporel recalé, lorsqu'on met en entrée une image constante égale à 1 sur tous les pixels.

L'opération complète de filtrage temporel avec recalage et normalisation s'écrit finalement selon quatre étapes :

- initialisation :

$$\mathbf{I}_f(\mathbf{x},1) = 0 \quad \mathbf{N}(\mathbf{x},1) = 0,$$

- filtrage temporel :

$$\mathbf{I}_f(\mathbf{x}, n) = (1 - \alpha)\mathbf{I}(\mathbf{x}, n) + \alpha \mathbf{I}_f\left(\mathbf{x} + [\delta_{n,n-1}], n - 1\right),$$

- Mise à jour de la matrice de normalisation :

$$\mathbf{N}(\mathbf{x}, n) = (1 - \alpha) \times 1 + \alpha \mathbf{N}\left(\mathbf{x} + [\delta_{n,n-1}], n - 1\right)$$

- Normalisation de la sortie du filtre temporel :

$$\mathbf{I}_m(\mathbf{x}, n) = \frac{1}{\mathbf{N}(\mathbf{x}, n)} \mathbf{I}_f(\mathbf{x}, n)$$

Ainsi, à chaque image reçue :

- dans un premier temps, le décalage $\delta_{n,n-1}$ entre l'image courante n et l'image précédente n-1 est estimé,
- ce décalage est utilisé pour recaler le filtre temporel et
- pour calculer la matrice de normalisation par pixel,
- ensuite, on déconvolue la sortie normalisée du filtre temporel par un filtre spatial.

La méthode de déconvolution est celle décrite ci-avant dans le cas d'une caméra fixe.

On décrit ci-après une estimation d'une translation entre deux images. Plusieurs types d'approche existent pour estimer le décalage entre différentes images. Les techniques simples sont ici privilégiées, afin d'envisager des traitements temps-réel. L'approche la plus simple consiste à rechercher le maximum d'inter-corrélation entre les images. Afin de ne pas être sensible aux bruits, aux turbulences et aux variations d'éclairage, il est préférable de ne pas travailler sur les images elles-mêmes mais sur les contours de l'image. L'estimation du décalage entre deux images consiste ainsi en deux étapes. Dans un premier temps, les deux images « contour » sont obtenues par filtrage des images initiales. Dans un second temps, la matrice d'inter-corrélation entre les deux images est calculée. Les coordonnées du maximum d'inter-corrélation indiquent le décalage en ligne et en colonne entre les deux images.

Le filtre permettant d'obtenir les images des contours est un filtre de Sobel donné par :

$$x \in \left[- M_{\text{Sobel}} \; M_{\text{Sobel}}\right]: \quad \text{Sobel}(x) = \frac{-x}{\sqrt{2\pi}.\sigma_{\text{Sobel}}^3} \exp\left\{\frac{-x^2}{2\sigma_{\text{Sobel}}^2}\right\}$$

où $\sigma_{\text{Sobel}}$ règle la bande-passante du filtre et $M_{\text{Sobel}}$ est la taille de la fenêtre de filtrage. Des valeurs avantageuses de ces paramètres sont $\sigma_{\text{Sobel}}$=0,9 pixels, $M_{\text{Sobel}}$=5.$\sigma_{\text{Sobel}}$.

Le même filtre est utilisé pour filtrer les lignes puis les colonnes d'une image $I(x,y)$ pour obtenir l'image contour notée $I_{\text{contour}}(x,y)$:

$$\mathbf{I}_{\text{temp}}(x,y) = \sum_{k=-M_{\text{Sobel}}}^{M_{\text{Sobel}}} \text{Sobel}(k).\mathbf{I}(x-k,y)$$

$$\mathbf{I}_{\text{contour}}(x,y) = \sum_{k=-M_{\text{Sobel}}}^{M_{\text{Sobel}}} \text{Sobel}(k).\mathbf{I}_{\text{temp}}(x,y-k)$$

L'inter-corrélation entre deux images contours $I^1_{\text{contour}}(x, y)$ et $I^2_{\text{contour}}(x, y)$ est ensuite donnée par :

$$\gamma(\delta x, \delta y) = \sum_x \sum_y \mathbf{I}^1_{\text{contour}}(x,y)\mathbf{I}^2_{\text{contour}}(x+\delta x, y+\delta y)$$

Pour réduire sensiblement le temps de calcul, le terme :

$$\gamma(\delta x, \delta y)$$

peut être obtenu en utilisant des transformées de Fourier rapides :

$$\gamma(\delta x, \delta y) = \text{IFFT}\left\{ \text{FFT}\left\{\mathbf{I}^1_{\text{contour}}(x,y)\right\} \times \text{FFT}\left\{\mathbf{I}^2_{\text{contour}}(N_{\text{colonnes}} - x, N_{\text{lignes}} - y)\right\} \right\},$$

Pour réduire encore les temps de calcul, l'estimation du mouvement n'est effectuée que sur un seul canal de l'image. Il peut arriver que les lignes des images brutes reçues soient entrelacées. Il est préférable dans ce cas de ne garder qu'une ligne sur deux (par exemple les lignes pairs) dans les images intercorrélées. Enfin, dans certains cas, la séquence vidéo contient des données en sur-inscription (typiquement la date et l'heure, le nom de la tranche, les coordonnées de l'assemblage filmé). Il est bien entendu recommandé de ne pas utiliser cette zone de l'image pour estimer le décalage.

On décrit maintenant le calcul du recalage.

Afin de recaler les sorties successives du filtre temporel entre deux images, une première solution consiste à calculer à chaque instant n le décalage $\delta_{n,n-1}$ entre l'image courante n et l'image précédente n-1. Néanmoins, les essais ont montré que cette approche ne peut pas s'appliquer au cas (fréquent) de mouvement lent de caméra. Ceci s'explique comme suit : en supposant par exemple que le mouvement de la caméra entraîne un déplacement de 0,3 lignes par image et un déplacement nul sur les colonnes, la matrice d'intercorrélation entre deux images successives devient en général maximale en $\delta_{n,n-1}$ = ([0], [0,3]) = (0,0). Ainsi, aucun déplacement ne peut être détecté, et aucune image n'est recalée, alors que le mouvement de la caméra nécessite pourtant un recalage réel d'environ 3 lignes toutes les dix images.

Pour pouvoir suivre des déplacements lents (typiquement inférieur à 0,5 lignes ou colonne par image) une autre approche est proposée ci-après. Le décalage est estimé non pas entre l'image courante n et l'image précédente n-1, mais entre l'image courante n et une image de référence $\delta_{n,\text{ref}}$.

Le terme $\delta_{n,n-1}$ est ensuite simplement donné par :

$$\delta_{n,n-1} = \delta_{n,\text{ref}} - \delta_{n-1,\text{ref}}$$

Le tableau 1 ci-après illustre un tel traitement dans le cas d'une vitesse de variation de 0,3 lignes par image. Sur cet exemple, on estime bien une moyenne de trois images décalées toutes les 10 images. L'image de référence est remise à jour lorsque l'image courante s'est sensiblement décalée. Un seuil de 20 pixels de décalage maximum a été fixé, ce qui permet de gérer tout mouvement de la caméra de vitesse supérieure à 1/20 (soit 0,05 lignes/colonnes par image), ce qui s'avère suffisant pour les cas d'applications envisagés.

**Tableau 1**

| indice de l'image | $n_{\text{ref}}$ | $n_{\text{ref}}+1$ | $n_{\text{ref}}+2$ | $n_{\text{ref}}+3$ | $n_{\text{ref}}+4$ | $n_{\text{ref}}+5$ | $n_{\text{ref}}+6$ | $n_{\text{ref}}+7$ | $n_{\text{ref}}+8$ | $n_{\text{ref}}+9$ | $n_{\text{ref}}+10$ |
|---|---|---|---|---|---|---|---|---|---|---|---|
| décalage réel image courante / image référence $\delta y_{n.\text{ref}}$ | 0 | 0.3 | 0.6 | 0.9 | 12 | 15 | 1.8 | 2.1 | 2.4 | 2.7 | 3 |
| décalage estimé image courante / image référence $[\delta y_{n.\text{ref}}]$ | 0 | 0 | 1 | 1 | 1 | 2 | 2 | 2 | 2 | 3 | 3 |
| décalage estimé image courante / image précédente $\delta y_{n.n-1} = [\delta y_{n.\text{ref}}] - [\delta y_{n-1.\text{ref}}]$ | | 0 | 1 | 0 | 0 | 1 | 0 | 0 | 0 | 1 | 0 |

La figure 3 résume les différentes étapes du traitement d'images, en situation de mouvement, avec :

- à partir d'une image courante IM$_n$ (instant n), à l'étape S1, l'estimation du décalage, et, éventuellement si le décalage estimé à l'étape S1 dépasse un seuil (test S6), une mise à jour du seuil à l'étape S7,
- à l'étape S2, le calcul du recalage,
- le filtrage temporel à l'étape S3 et la normalisation par pixel à l'étape S4, et
- le filtrage spatial à l'étape S5 pour obtenir l'image nette IN.

Les performances du traitement sont satisfaisantes, sans perte de qualité par rapport aux traitements sur caméra fixe. Quelques artéfacts peuvent cependant apparaître lorsque la caméra se met en mouvement après être restée quelques secondes à l'arrêt. Ces artéfacts ne sont néanmoins pas fonctionnellement gênants. Comme illustré sur la figure 4, ces artéfacts (ligne pointée par la flèche noire de cette figure) n'empêchent ni la lecture d'un numéro d'assemblage (dans l'entouré blanc, portant le numéro « 2D EL »), ni le calcul d'un jeu inter-assemblage (double flèche blanche). En outre, ces artéfacts peuvent être réduits par des techniques simples de traitement d'images.

Bien entendu, la présente invention ne se limite pas aux formes de réalisation décrites ci-avant à titre d'exemple ; elle s'étend à d'autres variantes.

Dans l'exemple ci-avant, le filtre temporel réalise une simple moyenne des images successives de la séquence vidéo. Dans cette moyenne, il peut être prévu d'accorder plus de poids (ou respectivement moins de poids) aux images de bonnes (respectivement de mauvaises) qualités. Plus généralement, le filtre temporel pourrait être remplacé par des traitements de fusion d'images plus pertinents. Ces approches supposent cependant la définition d'un ou plusieurs indicateurs de qualités, calculés sur la zone d'intérêt de l'image (zone contenant le numéro d'assemblage).

Le filtre spatial présenté ci-avant opère sur la totalité de l'image. Il peut être prévu en variante de concentrer les traitements sur la zone d'intérêt. En particulier, des informations « a priori » comme le caractère binaire de la zone contenant le numéro pourrait être pris en compte dans le traitement de restauration.

De plus, le filtre spatial actuel réalise une déconvolution de Wiener sur l'ensemble de l'image. D'autres traitements de déconvolution, à base d'ondelettes par exemple, pourraient également être prévus.

En outre, il convient de noter que des techniques de rehaussement de contrastes par égalisation locale d'histogrammes pour l'égalisation de contrastes peuvent être avantageuses.

## Revendications

1. Procédé de traitement de données d'images numériques successives, acquises par une caméra immergée dans un liquide comportant des turbulences causant un effet de déplacement apparent de pixels des images, **caractérisé en ce qu'**il comporte :

   - une modélisation de l'effet des turbulences sur les pixels des images, et
   - une déconvolution par ladite modélisation d'une image moyennée dans le temps,

   et **en ce que** la modélisation comporte l'estimation d'un modèle de densité de probabilité d'un vecteur de déplacement **u** relatif à l'effet de turbulences.

2. Procédé selon la revendication 1, **caractérisé en ce que** ledit modèle est de type à décroissance exponentielle.

3. Procédé selon la revendication 2, **caractérisé en ce que** ledit modèle $h_\sigma(\mathbf{u})$ s'exprime en fonction du vecteur **u,** par une relation du type :

$$h_\sigma(\mathbf{u}) = \frac{A}{\sigma^2}\exp\left\{-\frac{B\|\mathbf{u}\|}{\sigma}\right\}$$

où :

   - $\sigma$ représente l'écart-type de la norme du vecteur **u,**
   - A et B sont des constantes réelles positives.

4. Procédé selon la revendication 3, **caractérisé en ce que** $A=3/\pi$ et $B=\sqrt{6}$ .

5. Procédé selon l'une des revendications précédentes, **caractérisé en ce que** l'image moyenne dans le temps est estimée par une moyenne pondérée par des puissances d'un facteur d'oubli, respectivement décroissantes en fonction du temps.

6. Procédé selon la revendication 5, **caractérisé en ce que** l'image moyenne $I_\alpha(\mathbf{x},n)$, estimée à l'instant n pour un pixel de coordonnées vectorielles **x,** est donnée par :

$$\mathbf{I}_\alpha(\mathbf{x},n) = \frac{1-\alpha}{1-\alpha^n}\sum_{k=0}^{n-1}\alpha^k\mathbf{I}(\mathbf{x},n-k)$$

le terme $\alpha$ étant un réel correspondant au facteur d'oubli.

7. Procédé selon l'une des revendications précédentes, **caractérisé en ce que** l'image moyenne dans le temps est estimée par un filtrage temporel récursif.

8. Procédé selon la revendication 7 prise en combinaison avec la revendication 6, **caractérisé en ce qu'**une n[ième] sortie du filtre temporel, pour l'instant n, notée $I_f(\mathbf{x},n)$, et l'image moyenne $I_\alpha(\mathbf{x},n)$ sont liées par les relations :

$$\mathbf{I}_f\big(\mathbf{x},n\big)=\alpha\mathbf{I}_f\big(\mathbf{x},n-1\big)+\big(1-\alpha\big)\mathbf{I}\big(\mathbf{x},n\big)$$

$$\mathbf{I}_\alpha\big(\mathbf{x},n\big)=\frac{1}{1-\alpha^n}\mathbf{I}_f\big(\mathbf{x},n\big)$$

**9.** Procédé selon l'une des revendications 5, 6 et 8, **caractérisé en ce que** le facteur d'oubli $\alpha$ est choisi égal à 0,99.

**10.** Procédé selon l'une des revendications précédentes, **caractérisé en ce que** ladite déconvolution comporte l'application d'un filtrage spatial, linéaire, d'expression correspondant à ladite modélisation.

**11.** Procédé selon la revendication 10, **caractérisé en ce que** le filtrage est de type de Wiener.

**12.** Procédé selon la revendication 11, **caractérisé en ce que** le filtre spatial est donné dans le domaine spectral par :

$$W_\sigma\big(\mathbf{f}\big)=\frac{H_\sigma^*\big(\mathbf{f}\big)}{\big\|H_\sigma\big(\mathbf{f}\big)\big\|^2+\dfrac{S_b\big(\mathbf{f}\big)}{S_{\text{nette}}\big(\mathbf{f}\big)}},\quad \text{si } \big\|\mathbf{f}\big\|\le f_c$$

$$W_\sigma\big(\mathbf{f}\big)=0,\quad \text{si } \big\|\mathbf{f}\big\|> f_c$$

où :

- $\mathbf{f}$ est un vecteur bidimensionnel de deux fréquences normalisées après transformée de Fourier bidimensionnelle,
- $f_c$ est une fréquence de coupure du filtre pour éliminer d'éventuels repliements spectraux,
- $S_b(\mathbf{f})$ et $S_{\text{nette}}(\mathbf{f})$ sont respectivement des densités spectrales de puissance d'un bruit et d'une image nette à déterminer, et
- $H_\sigma(\mathbf{f})$ est la transformée de Fourier bidimensionnelle de la densité de probabilité de l'effet des turbulences $h_\sigma(\mathbf{u})$.

**13.** Procédé selon la revendication 12, **caractérisé en ce que** le filtre spatial s'exprime par :

$$W_\sigma\big(\mathbf{f}\big)=\frac{H_\sigma\big(\mathbf{f}\big)}{H_\sigma^2\big(\mathbf{f}\big)+RBS}$$

où le terme RBS s'exprime en fonction de paramètres choisis de sorte que le terme RBS soit compris entre $10^{-2}$ et $10^{-4}$.

**14.** Procédé selon l'une des revendications 12 et 13, prise en combinaison avec la revendication 3, **caractérisé en ce que** la transformée de Fourier bidimensionnelle $H_\sigma(\mathbf{f})$ de la densité de probabilité de l'effet des turbulences $h_\sigma(\mathbf{u})$, est donnée par :

$$H_\sigma\big(\mathbf{f}\big)=\Big(1+C\big(\sigma.\big\|\mathbf{f}\big\|\big)^2\Big)^{-\frac{3}{2}}$$

où C est une constante réelle positive et $\sigma$ est un réel positif compté en nombre de pixels.

**15.** Procédé selon la revendication 14, **caractérisé en ce que** la transformée de Fourier bidimensionnelle $H_\sigma(\mathbf{f})$ est donnée par :

$$H_\sigma(\mathbf{f}) = \left(1 + \frac{2}{3}\left(\pi\sigma.\|\mathbf{f}\|\right)^2\right)^{-\frac{3}{2}}$$

avec $\sigma$ compris entre 0 et 30 pixels.

**16.** Procédé selon l'une des revendications précédentes, dans lequel ladite caméra se déplace en translation, **caractérisé en ce qu'**on applique un recalage d'une image précédente à une image courante, pour l'estimation de l'image moyenne.

**17.** Procédé selon la revendication 16, prise en combinaison avec la revendication 7, **caractérisé en ce qu'**il comporte un filtrage temporel avec recalage et normalisation.

**18.** Procédé selon la revendication 17, prise en combinaison avec la revendication 8, **caractérisé en ce qu'**il comporte les étapes :

- d'initialisation, avec :

$$\mathbf{I}_f(\mathbf{x},1) = 0 \quad \mathbf{N}(\mathbf{x},1) = 0\,,$$

- de filtrage temporel récursif, avec :

$$\mathbf{I}_f(\mathbf{x},n) = (1-\alpha)\mathbf{I}(\mathbf{x},n) + \alpha\mathbf{I}_f\left(\mathbf{x} + \left[\delta_{n,n-1}\right], n-1\right),$$

où

$$[\boldsymbol{\delta}_{n,n-1}] = \left(\left[\delta x_{n,n-1}\right], \left[\delta y_{n,n-1}\right]\right)$$

correspond à un vecteur de décalages en lignes x et/ou en colonnes y, arrondis aux entiers les plus proches, entre l'image courante n et l'image précédente n-1 du fait de la translation de la caméra,
- de mise à jour d'une matrice de normalisation **N,** avec :

$$\mathbf{N}(\mathbf{x},n) = (1-\alpha)\times 1 + \alpha\mathbf{N}\left(\mathbf{x} + \left[\delta_{n,n-1}\right], n-1\right)$$

- et de normalisation de la sortie du filtre temporel, avec :

$$\mathbf{I}_m(\mathbf{x},n) = \frac{1}{\mathbf{N}(\mathbf{x},n)}\mathbf{I}_f(\mathbf{x},n)$$

**19.** Programme informatique comportant des instructions pour la mise en oeuvre du procédé selon l'une des revendications précédentes lorsque ce programme est exécuté par un processeur (PROC).

**20.** Dispositif de traitement de données d'images, comportant une entrée pour traiter des données d'images numériques successives, acquises par une caméra immergée dans un liquide comportant des turbulences causant un effet de déplacement apparent de pixels des images,
**caractérisé en ce qu'**il comporte en outre des moyens de calcul pour la mise en oeuvre du procédé selon l'une des revendications 1 à 18.

**21.** Utilisation du procédé selon l'une des revendications 1 à 18, au traitement de données d'images acquises par une caméra immergée dans l'eau d'une installation nucléaire, pour filmer des assemblages de combustible, **caractérisée en ce qu'**elle comporte au moins :

- la détermination, à partir des images acquises et traitées, d'un état des assemblages de combustible.

**22.** Utilisation selon la revendication 21, **caractérisée en ce qu'**elle comporte au moins :

- la détermination, dans lesdites images acquises et traitées, d'au moins un identifiant d'assemblage de combustible.

**23.** Utilisation selon l'une des revendications 21 et 22, **caractérisée en ce qu'**elle comporte en outre :

- la mesure, dans lesdites images, d'un écart entre assemblages de combustibles.

**24.** Installation pour la mise en oeuvre d'une utilisation selon l'une des revendications 21 à 23, **caractérisée en ce qu'**elle comporte au moins une caméra et un dispositif selon la revendication 20.


**Patentansprüche**

**1.** Verfahren zur Bearbeitung von aufeinanderfolgenden digitalen Bilddaten, die von einer in eine Flüssigkeit getauchten Kamera erfasst werden, umfassend Turbulenzen, die einen offensichtlichen Bewegungseffekt von Pixeln der Bilder bewirken, **dadurch gekennzeichnet, dass** es umfasst:

- eine Modellierung des Effekts der Turbulenzen auf die Pixel der Bilder,
und
- eine Dekonvolution eines über die Zeit gemittelten Bildes durch die Modellierung,

und dass die Modellierung die Schätzung eines Modells einer Wahrscheinlichkeitsdichte eines Bewegungsvektors **u** bezogen auf den Turbulenzeffekt umfasst.

**2.** Verfahren nach Anspruch 1, **dadurch gekennzeichnet, dass** das Modell vom Typ mit exponentieller Abnahme ist.

**3.** Verfahren nach Anspruch 2, **dadurch gekennzeichnet, dass** das Modell $h_\sigma(\mathbf{u})$ in Abhängigkeit vom Vektor **u** durch ein Verhältnis folgenden Typs ausgedrückt ist:

$$h_\sigma\left(\mathbf{u}\right) = \frac{A}{\sigma^2} \exp\left\{-\frac{B\left\|\mathbf{u}\right\|}{\sigma}\right\}$$

wobei:

- $\sigma$ die typische Abweichung von der Norm des Vektors **u** darstellt,
- A und B positive reale Konstanten sind.

**4.** Verfahren nach Anspruch 3, **dadurch gekennzeichnet, dass** $A=3/\pi$ und $B=\sqrt{6}$.

**5.** Verfahren nach einem der vorhergehenden Ansprüche, **dadurch gekennzeichnet, dass** das über die Zeit gemittelte Bild mit einem Durchschnitt geschätzt wird, der durch Leistungen eines Vergessensfaktors bzw., die in Abhängigkeit von der Zeit abnehmend sind, gewichtet ist.

**6.** Verfahren nach Anspruch 5, **dadurch gekennzeichnet, dass** das gemittelte Bild $I_\alpha(\mathbf{x},n)$, das zum Zeitpunkt n für ein Pixel von vektoriellen Koordinaten **x** geschätzt wird, gegeben ist durch:

$$I_\alpha(\mathbf{x}, n) = \frac{1-\alpha}{1-\alpha^n} \sum_{k=0}^{n-1} \alpha^k \mathbf{I}(\mathbf{x}, n-k)$$

wobei der Term $\alpha$ eine reale Zahl entsprechend dem Vergessensfaktor ist.

7. Verfahren nach einem der vorhergehenden Ansprüche, **dadurch gekennzeichnet, dass** das über die Zeit gemittelte Bild durch eine rekursive Zeitfilterung geschätzt wird.

8. Verfahren nach Anspruch 7 in Kombination mit Anspruch 6, **dadurch gekennzeichnet, dass** der n-te Ausgang des Zeitfilters für den Zeitpunkt n, mit $I_f(\mathbf{x},n)$ bezeichnet, und das gemittelte Bild $I_\alpha(\mathbf{x},n)$ durch die folgenden Relationen verbunden sind:

$$\mathbf{I}_f(\mathbf{x}, n) = \alpha \mathbf{I}_f(\mathbf{x}, n-1) + (1-\alpha)\mathbf{I}(\mathbf{x}, n)$$

$$\mathbf{I}_\alpha(\mathbf{x}, n) = \frac{1}{1-\alpha^n} \mathbf{I}_f(\mathbf{x}, n)$$

9. Verfahren nach einem der Ansprüche 5, 6 und 8, **dadurch gekennzeichnet, dass** der Vergessensfaktor $\alpha$ gleich 0,99 gewählt wird.

10. Verfahren nach einem der vorhergehenden Ansprüche, **dadurch gekennzeichnet, dass** die Dekonvolution die Anwendung einer räumlichen, linearen Filterung mit einer Expression enstprechend der Modellierung umfasst.

11. Verfahren nach Anspruch 10, **dadurch gekennzeichnet, dass** die Filterung vom Typ Wiener ist.

12. Verfahren nach Anspruch 11, **dadurch gekennzeichnet, dass** der räumliche Filter in dem Spektralbereich gegeben ist durch:

$$W_\sigma(\mathbf{f}) = \frac{H_\sigma^*(\mathbf{f})}{\|H_\sigma(\mathbf{f})\|^2 + \frac{S_b(\mathbf{f})}{S_{nette}(\mathbf{f})}}, \quad \text{si } \|\mathbf{f}\| \le f_c$$

$$W_\sigma(\mathbf{f}) = 0, \quad \text{si } \|\mathbf{f}\| > f_c$$

wobei:

- $\mathbf{f}$ ein zweidimensionaler Vektor von zwei genormten Frequenzen nach zweidimensionaler Fourier-Transformierter ist,
- eine Grenzfrequenz des Filters ist, um mögliche Spektralfaltungen zu beseitigen,
- $S_b(\mathbf{f})$ und $S_{nette}(\mathbf{f})$ jeweils Spektralleistungsdichten eines Lärms und eines zu bestimmenden scharfen Bildes sind, und
- $H_\sigma(\mathbf{f})$ die zweidimensionale Fourier-Transformierte der Wahrscheinlichkeitsdichte des Effekts der Turbulenzen $h_\sigma(\mathbf{u})$ ist.

**13.** Verfahren nach Anspruch 12, **dadurch gekennzeichnet, dass** der räumliche Filter ausgedrückt ist durch:

$$W_\sigma(\mathbf{f}) = \frac{H_\sigma(\mathbf{f})}{H_\sigma^2(\mathbf{f}) + RBS}$$

wobei der Term RBS in Abhängigkeit von ausgewählten Parametern ausgedrückt ist, so dass der Term RBS zwischen $10^{-2}$ und $10^{-4}$ liegt.

**14.** Verfahren nach einem der Ansprüche 12 und 13 in Kombination mit Anspruch 3, **dadurch gekennzeichnet, dass** die zweidimensionale Fourier-Transformierte $H_\sigma(\mathbf{f})$ der Wahrscheinlichkeitsdichte des Effekts der Turbulenzen $h_\sigma(\mathbf{u})$ gegeben ist durch:

$$H_\sigma(\mathbf{f}) = \left(1 + C\left(\sigma . \|\mathbf{f}\|\right)^2\right)^{-\frac{3}{2}}$$

wobei C eine positive reale Konstante und $\sigma$ eine positive reale Zahl, gezählt in Anzahl von Pixeln, ist.

**15.** Verfahren nach Anspruch 14, **dadurch gekennzeichnet, dass** die zweidimensionale Fourier-Transformierte $H_\sigma(\mathbf{f})$ gegeben ist durch:

$$H_\sigma(\mathbf{f}) = \left(1 + \frac{2}{3}\left(\pi\sigma . \|\mathbf{f}\|\right)^2\right)^{-\frac{3}{2}}$$

wobei $\sigma$ zwischen 0 und 30 Pixeln liegt.

**16.** Verfahren nach einem der vorhergehenden Ansprüche, bei dem sich die Kamera in Translation bewegt, **dadurch gekennzeichnet, dass** eine Neueinstellung eines vorherigen Bildes an einem laufenden Bild für die Schätzung des gemittelten Bildes angewandt wird.

**17.** Verfahren nach Anspruch 16 in Kombination mit Anspruch 7, **dadurch gekennzeichnet, dass** es eine zeitliche Filterung mit Neueinstellung und Normung umfasst.

**18.** Verfahren nach Anspruch 17 in Kombination mit Anspruch 8, **dadurch gekennzeichnet, dass** es die folgenden Schritte umfasst:

- Initialisierung mit:

$$\mathbf{I}_f(\mathbf{x},1) = 0 \quad \mathbf{N}(\mathbf{x},1) = 0,$$

- rekursive zeitliche Filterung mit:

$$\mathbf{I}_f(\mathbf{x}, n) = (1 - \alpha)\mathbf{I}(\mathbf{x}, n) + \alpha\mathbf{I}_f\left(\mathbf{x} + \left[\delta_{n,n-1}\right], n - 1\right),$$

wobei

$$\left[\boldsymbol{\delta}_{n,n-1}\right] = \left(\left[\delta x_{n,n-1}\right], \left[\delta y_{n,n-1}\right]\right)$$

einem Vektor von Verschiebungen in Zeilen x und/oder Spalten y entspricht, die auf die nächsten ganzen Zahlen zwischen dem laufenden Bild n und dem vorherigen Bild n-1 auf Grund der Translation der Kamera gerundet sind,
- Aktualisierung einer Normungsmatrix **N** mit:

$$\mathbf{N}(\mathbf{x}, n) = (1 - \alpha) \times 1 + \alpha\mathbf{N}\left(\mathbf{x} + \left[\delta_{n,n-1}\right], n - 1\right)$$

- und Normung des Ausgangs des zeitlichen Filters mit:

$$\mathbf{I}_m(\mathbf{x}, n) = \frac{1}{\mathbf{N}(\mathbf{x}, n)}\mathbf{I}_f(\mathbf{x}, n)$$

19. Informatikprogramm, umfassend Befehle für die Durchführung des Verfahrens nach einem der vorhergehenden Ansprüche, wenn dieses Programm von einem Prozessor (PROC) ausgeführt wird.

20. Vorrichtung zur Bilddatenbearbeitung, umfassend einen Eingang, um aufeinanderfolgende digitale Bilddaten zu bearbeiten, die von einer in eine Flüssigkeit getauchten Kamera erfasst werden, umfassend Turbulenzen, die einen offensichtlichen Bewegungseffekt von Pixeln der Bilder bewirken, **dadurch gekennzeichnet, dass** sie ferner Berechnungsmittel für die Durchführung des Verfahrens nach einem der Ansprüche 1 bis 18 umfasst.

21. Verwendung des Verfahrens nach einem der Ansprüche 1 bis 18 für die Bearbeitung von Bilddaten, die von einer in das Wasser einer Nuklearanlage getauchten Kamera zum Filmen von Brennelementanordnungen erfasst werden, **dadurch gekennzeichnet, dass** sie mindestens umfasst:

- auf Basis der erfassten und bearbeiteten Bilder die Bestimmung eines Zustandes der Brennelementanordnungen.

22. Verwendung nach Anspruch 21, **dadurch gekennzeichnet, dass** sie mindestens umfasst:

- in den erfassten und bearbeiteten Bildern die Bestimmung mindestens eines Identifikators einer Brennelementanordnung.

23. Verwendung nach einem der Ansprüche 21 und 22, **dadurch gekennzeichnet, dass** sie ferner umfasst:

- in den Bildern das Messen einer Abweichung zwischen Brennelementanordnungen.

24. Anlage für die Durchführung einer Verwendung nach einem der Ansprüche 21 bis 23, **dadurch gekennzeichnet, dass** sie mindestens eine Kamera und eine Vorrichtung nach Anspruch 20 umfasst.

**Claims**

1. Method for processing successive digital image data, acquired by a camera immersed in a liquid comprising turbulence phenomena causing an effect of apparent displacement of pixels of the images, **characterized in that** it comprises:

   - a modeling of the effect of the turbulence on the pixels of the images, and
   - a de-convolution by said modeling of a time-averaged image,

   an **in that** the modeling comprises the estimation of a model of probability density of a displacement vector **u** relating to the effect of turbulence.

2. The method as claimed in claim 1, **characterized in that** said model is of the exponentially decreasing type.

3. The method as claimed in claim 2, **characterized in that** said model $h_\sigma(\mathbf{u})$ is expressed as a function of the vector **u,** by an equation of the type:

$$h_\sigma(\mathbf{u}) = \frac{A}{\sigma^2} \exp\left\{ -\frac{B\|\mathbf{u}\|}{\sigma} \right\}$$

   where:

   - $\sigma$ represents the standard deviation of the norm of the vector **u,**
   - A and B are positive real constants.

4. The method as claimed in claim 3, **characterized in that** A=3/$\pi$ and $B = \sqrt{6}$ .

5. The method as claimed in any of the preceding claims, **characterized in that** the time-averaged image is estimated by an average weighted by powers of a forgetting factor, respectively decreasing as a function of time.

6. The method as claimed in claim 5, **characterized in that** the average image $\mathbf{I}_\alpha(\mathbf{x},n)$, estimated at the time n for a pixel with vector coordinates **x,** is given by:

$$\mathbf{I}_\alpha(\mathbf{x},n) = \frac{1-\alpha}{1-\alpha^n} \sum_{k=0}^{n-1} \alpha^k \mathbf{I}(\mathbf{x}, n-k)$$

   the term $\alpha$ being a real number corresponding to the forgetting factor.

7. The method as claimed in any of the preceding claims, **characterized in that** the time-averaged image is estimated by a recursive temporal filtering.

8. The method as claimed in claim 7 combined with claim 6, **characterized in that** an $n^{th}$ output of the temporal filter, for the time n, denoted $\mathbf{I}_f(\mathbf{x},n)$, and the average image $\mathbf{I}_\alpha(\mathbf{x},n)$ are linked by the equations:

$$\mathbf{I}_f(\mathbf{x},n) = \alpha \mathbf{I}_f(\mathbf{x},n-1) + (1-\alpha)\mathbf{I}(\mathbf{x},n)$$

$$\mathbf{I}_\alpha(\mathbf{x},n) = \frac{1}{1-\alpha^n} \mathbf{I}_f(\mathbf{x},n)$$

9. The method as claimed any of claims 5, 6 and 8, **characterized in that** the forgetting factor a is chosen equal to 0.99.

10. The method as claimed in any of the preceding claims, **characterized in that** said de-convolution comprises the application of a linear spatial filtering, with an expression corresponding to said modeling.

**11.** The method as claimed in claim 10, **characterized in that** the filtering is of the Wiener type.

**12.** The method as claimed in claim 11, **characterized in that** the modeling comprises the estimation of a model of probability density of a displacement vector **u** relating to the effect of turbulence, and wherein the spatial filter is given in the spectral domain by:

$$W_\sigma(\mathbf{f}) = \frac{H_\sigma^*(\mathbf{f})}{\|H_\sigma(\mathbf{f})\|^2 + \dfrac{S_b(\mathbf{f})}{S_{\text{sharp}}(\mathbf{f})}}, \quad \text{if } \|\mathbf{f}\| \leq f_c$$

$$W_\sigma(\mathbf{f}) = 0, \quad \text{if } \|\mathbf{f}\| > f_c$$

where:

- **f** is a two-dimensional vector of two frequencies normalized after two-dimensional Fourier transform,
- $f_c$ is a cutoff frequency of the filter for eliminating any potential spectral aliasing,
- $S_b(\mathbf{f})$ and $S_{\text{sharp}}(\mathbf{f})$ are respectively spectral power densities of a noise and of a sharp image to be determined, and
- $H_\sigma(\mathbf{f})$ is the two-dimensional Fourier transform of the probability density of the effect of the turbulence $h_\sigma(\mathbf{u})$.

**13.** The method as claimed in claim 12, **characterized in that** the spatial filter is expressed by:

$$W_\sigma(\mathbf{f}) = \frac{H_\sigma(\mathbf{f})}{H_\sigma^2(\mathbf{f}) + \text{RBS}}$$

where the term RBS is expressed as a function of parameters chosen such that the term RBS is in the range between $10^{-2}$ and $10^{-4}$.

**14.** The method as claimed in any of claims 12 and 13, combined with claim 3, **characterized in that** the two-dimensional Fourier transform $H_\sigma(\mathbf{f})$ of the probability density of the effect of the turbulence $h_\sigma(\mathbf{u})$, is given by:

$$H_\sigma(\mathbf{f}) = \left(1 + C\left(\sigma.\|\mathbf{f}\|\right)^2\right)^{-\frac{3}{2}}$$

where C is a positive real constant and $\sigma$ is a positive real number counted in number of pixels.

**15.** The method as claimed in claim 14, wherein the two-dimensional Fourier transform $H_\sigma(\mathbf{f})$ is given by:

$$H_\sigma(\mathbf{f}) = \left(1 + \frac{2}{3}\left(\pi\sigma.\|\mathbf{f}\|\right)^2\right)^{-\frac{3}{2}}$$

with $\sigma$ in the range between 0 and 30 pixels.

**16.** The method as claimed in any of the preceding claims, in which said camera moves in translation, **characterized in that** a repositioning of a preceding image is applied to a current image, for the estimation of the average image.

**17.** The method as claimed in claim 16, combined with claim 7, **characterized in that** the method comprises a temporal filtering with repositioning and normalization.

**18.** The method as claimed in claim 17, combined with claim 8, **characterized in that** it comprises the steps:

- for resetting, with:

$$\mathbf{I}_f(\mathbf{x},1) = 0 \quad \mathbf{N}(\mathbf{x},1) = 0,$$

- for recursive temporal filtering, with:

$$\mathbf{I}_f(\mathbf{x},n) = (1-\alpha)\mathbf{I}(\mathbf{x},n) + \alpha\mathbf{I}_f\left(\mathbf{x} + \lfloor \delta_{n,n-1} \rfloor, n-1\right),$$

where

$$[\delta_{n,n-1}] = \left([\delta x_{n,n-1}], [\delta y_{n,n-1}]\right)$$

corresponds to a row shift x and/or column shift y vector, rounded to the nearest integers, between the current image n and the preceding image n-1 owing to the translation of the camera,
- for updating a normalization matrix **N,** with:

$$\mathbf{N}(\mathbf{x},n) = (1-\alpha) \times 1 + \alpha\mathbf{N}\left(\mathbf{x} + \lfloor \delta_{n,n-1} \rfloor, n-1\right)$$

- and for normalizing the output of the temporal filter, with:

$$\mathbf{I}_m(\mathbf{x},n) = \frac{1}{\mathbf{N}(\mathbf{x},n)}\mathbf{I}_f(\mathbf{x},n)$$

19. A computer program comprising instructions for the implementation of the method as claimed in anyone of the preceding claims when this program is executed by a processor (PROC).

20. A device for processing image data, comprising an input for processing successive digital image data, acquired by a camera immersed in a liquid comprising turbulence phenomena causing an effect of apparent displacement of pixels of the images,
**characterized in that** the device furthermore comprises calculation means for the implementation of the method as claimed in anyone of claims 1 to 18.

21. A use of the method as claimed in one of claims 1 to 18, for the processing of image data acquired by a camera immersed in the water of a nuclear installation, for filming fuel element assemblies, **characterized in that** it comprises at least:

- the determination, from the acquired and processed images, of a state of the fuel element assemblies.

22. The use as claimed in claim 21, comprising at least:

- the determination, in said acquired and processed images, of at least one identifier of a fuel element assembly.

23. The use as claimed in anyone of claims 21 and 22, **characterized in that** furthermore comprises:

- the measurement, in said images, of a spacing between fuel element assemblies.

24. An installation for the implementation of the use according to anyone of claims 21 to 23, **characterized in that** it comprises at least a camera and a device according to claim 20.

# FIG. 1

EP 2 668 635 B1

IM$_n$

IM$_{n-1}$

F1 — Filtre temporel

ISF

F2 — Filtre spatial

IN

FIG. 2

# FIG. 3

# FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20090252430 A

**Littérature non-brevet citée dans la description**

• **WEILIN HOU.** A simple underwater imaging model. *Optics letters,* vol. 34 (17), 2688-2690